# EUROPÄISCHE PATENTANMELDUNG

(11) **EP 2 711 504 A1**
(43) Veröffentlichungstag der Anmeldung: **26.03.2014**
(21) Anmeldenummer: 12185046.5
(22) Anmeldetag: 19.09.2012
(51) Int. Cl.: F01D 25/16, F01D 25/28

(54) **Vorrichtung zum Überbrücken eines Spiels**

(71) Anmelder: Siemens Aktiengesellschaft, 80333 München (DE)
(72) Erfinder: Flock, Marcel, 45147 Essen (DE); ter Beek, Marc, 46399 Bocholt (DE); Ruhe, Martin, 46514 Schermbeck (DE)

(57) **Zusammenfassung**

Die Erfindung betrifft eine Vorrichtung (1) zum Überbrücken eines Spiels zwischen einem ersten Bauteil (2) und einem zweiten Bauteil (3), wobei ein erster Keil (4) gegenüber einem zweiten Keil (5) derart verschiebbar angeordnet ist, dass über eine Federkraft eine Spannvorrichtung (11) kraftschlüssig gegen das zweite Bauteil (3) eine Kraft ausübt.

## Beschreibung

Die Erfindung betrifft eine Vorrichtung zum Überbrücken eines Spiels zwischen einem ersten Bauteil und einem zweiten Bauteil, wobei die Vorrichtung einen ersten Keil und einen zweiten Keil umfasst, die gegeneinander verschiebbar ausgebildet sind.

Großvolumige Turbomaschinen, wie beispielsweise Dampfturbinen, müssen auf vergleichsweise massiven Fundamenten fixiert und gelagert werden. In der Regel wird die axiale und radiale Position von Turbinenlagern durch maßlich gefertigte Beipasskeile (Passfedern) in Bezug auf das Lagergehäuse oder auf ein Fundament fixiert. Solch gefertigte Beipasskeile werden oftmals so auf Maß gefertigt, dass im Montagezustand, bei der sich die Dampfturbine und das Fundament noch nicht auf Betriebstemperatur befinden, kein Spiel zwischen den Beipasskeilen und dem Lagerkörper bzw. Lagergehäuse vorhanden ist. Die Beipasskeile werden in diesem Montagezustand spielfrei eingepasst. Allerdings kann es vorkommen, dass während des Betriebs der Dampfturbine die Betriebstemperaturen zu einem Spiel zwischen Lager und Beipasskeil führen, was durch eine thermische Dehnung zwischen Lager und Lagergehäuse erfolgt. Solch ein entstandenes Spiel ist reversibel, wohingegen ein Verschleiß der Anlagenflächen zu einem irreversiblen Spiel führen kann. Problematisch ist hierbei, dass das vergrößerte Spiel zu einem erhöhten Verschleiß führen kann oder im schlimmeren Fall, dass das dynamische Laufverhalten des Turbosatzes negativ beeinflusst wird.

Bisher wurden die Beipasskeile spielfrei bzw. mit kleinem Spiel zwischen den Anlagenflächen eingebracht. Eine Nachjustierung oder Nachstellung bzw. dynamisches Anpassen der Spiele im Betriebszustand wurde bisher nicht durchgeführt.

Hier möchte die Erfindung Abhilfe schaffen.

Aufgabe der Erfindung ist es, eine Vorrichtung zum Überbrücken eines Spiels zwischen einem ersten Bauteil und einem zweiten Bauteil weiterzubilden, das nachjustiert werden kann.

Gelöst wird diese Aufgabe durch eine Vorrichtung zum Überbrücken eines Spiels zwischen einem ersten Bauteil und einem zweiten Bauteil, wobei die Vorrichtung einen ersten Keil und einen zweiten Keil umfasst, die gegeneinander verschiebbar ausgebildet sind, wobei im zweiten Keil eine Spannvorrichtung angeordnet ist, wobei ferner eine Krafteinrichtung vorgesehen ist, mit der die Spannvorrichtung eine Kraft auf das Bauteil ausüben kann.

Ein wesentliches Merkmal der Erfindung ist es, dass ein Spiel während des Betriebs ausgeglichen werden kann, was durch die Krafteinrichtung ermöglicht wird. Im eingebauten Zustand wird die Vorrichtung spielfrei eingearbeitet. Während des Betriebs wird ein zu vermeidendes Spiel zwischen der Vorrichtung und dem zweiten Bauteil automatisch minimiert, da die Krafteinrichtung eine Spannvorrichtung umfasst, mit der eine Kraft permanent auf das zweite Bauteil ausgeübt wird.

Vorteilhafte Weiterbildungen sind in den Unteransprüchen angegeben.

Eine vorteilhafte Maßnahme zur Verbesserung der Erfindung ist es, dass ein im Betriebszustand vorgespanntes Federpaket dauerhaft eine Kraft auf den ersten Keil und den zweiten Keil ausübt. Dadurch wird eine permanent wirkende Kraft auf ein Lager und ein Lagergehäuse ausgeübt. Zusätzlich zum Formschluss, der durch die spielfreie Einpassung des ersten und des zweiten Keils entsteht, dient diese Federkraft zur Lagerfixierung. Sofern im Betriebszustand der Spalt zwischen Lager und Lagergehäuse aufgeweitet wird und dadurch der Formschluss nicht mehr gegeben ist, bleibt die Federkraft als positionierende Kraft erhalten. Der wesentliche Vorteil ist, dass dadurch eine indifferente Position des Lagers im Lagergehäuse vermieden wird.

Ein wesentlicher Vorteil besteht darin, dass durch die erfindungsgemäße Vorrichtung eine axiale oder radiale Vorspannung mit Nachstellfunktion zur Fixierung von Radial- oder Axiallagern in eine bestehende Anlage einbringbar ist, ohne dass hierzu mechanische Nacharbeiten an der Anlage, z.B. an dem Lagergehäuse erforderlich sind.

Des Weiteren wird erfindungsgemäß erwirkt, dass durch die Federkraft im ersten Keil und im zweiten Keil ein zusätzlicher Kraftschluss ermöglicht wird, mit dem das Lager im Lagergehäuse fixiert wird. Sofern der Spalt vergrößert wird, dient die Federkraft dazu, den Kraftschluss aufrecht zu halten, indem der erste Keil und der zweite Keil nachgeführt werden. Der Kraftschluss bleibt somit erhalten.

Die Vorrichtung ist als eine kompakte Lösung ausgebildet und kann somit vorteilhafterweise im Servicefall eingesetzt werden. Somit kann die Vorrichtung auch in bestehenden Anlagen ohne weitere mechanische Bearbeitungen an dem Lager oder dem Lagergehäuse eingesetzt werden.

Ebenso ist es vorteilhafterweise möglich, die Vorrichtung leicht zu entfernen.

Die Erfindung wird nun anhand eines Ausführungsbeispiels näher erläutert.

Darin zeigen:
- FIG 1: eine erste Querschnittsansicht der Vorrichtung,
- FIG 2: eine zweite Querschnittsansicht der Vorrichtung,
- FIG 3: eine dritte Querschnittsansicht der Vorrichtung.

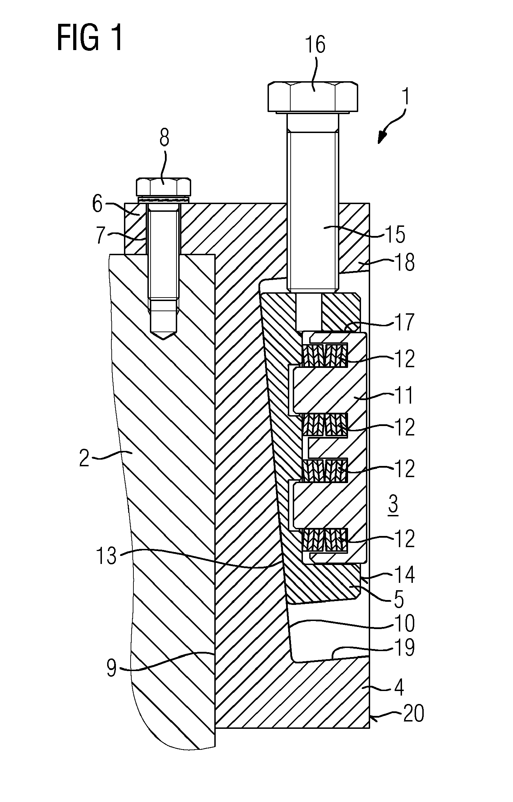

FIG 1 zeigt eine Vorrichtung 1 zum Überbrücken eines Spiels zwischen einem ersten Bauteil 2 und einem nicht näher dargestellten zweiten Bauteil 3. Die Vorrichtung 1 umfasst einen ersten Keil 4 und einen zweiten Keil 5. Der erste Keil 4 weist einen Vorsprung 6 auf. Dieser Vorsprung 6 weist eine Bohrung 7 auf, durch die eine Schraube 8 in das erste Bauteil 2 verschraubt wird. Somit ist der erste Keil 4 kraftschlüssig mit dem ersten Bauteil 2 verbunden. Der erste Keil 4 weist eine Vorderfläche 9 auf, die zum Anlegen an das erste Bauteil 2 ausgebildet ist. Des Weiteren weist der erste Keil 4 eine erste Gleitfläche 10 auf, die schräg zur ersten Vorderfläche 9 ausgebildet ist und einen Keil bildet. Der erste Keil 4 und der zweite Keil 5 sind gegeneinander verschiebbar angeordnet. Im zweiten Keil 5 ist eine Spannvorrichtung 11 angeordnet. Des Weiteren ist eine Krafteinrichtung 12 vorgesehen, mit der die Spannvorrichtung 11 eine Kraft auf das zweite Bauteil 3 ausüben kann.

Der zweite Keil 5 weist eine zweite Gleitfläche 13 auf, die zum Anlegen an die erste Gleitfläche 10 ausgebildet ist. Des Weiteren weist der zweite Keil 5 eine Gleitfläche 14 auf, die als gleitende Anlagefläche an das zweite Bauteil 3 ausgebildet ist.

Ein Verschieben des zweiten Keils 5 gegenüber dem ersten Keil 4 führt zu einer Bewegung des zweiten Keils in Richtung des zweiten Bauteils 3. Diese Bewegung wird ermöglicht durch eine weitere Bohrung 15, durch die eine weitere Schraube 16 angeordnet ist, die in den zweiten Keil 5 eingreift. Ein Drehen der Schraube 16 führt zu einer Bewegung des zweiten Keils 5 gegenüber dem ersten Keil 4.

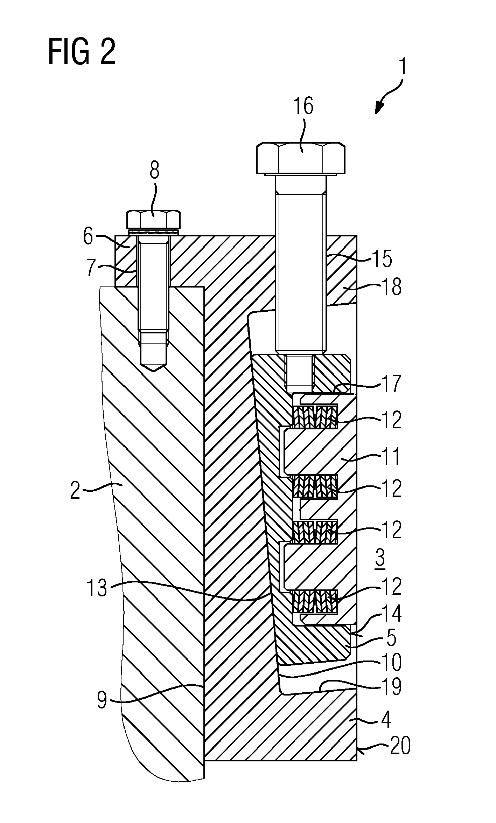

An der Gleitfläche 14 im zweiten Keil 5 ist eine Nut 17 angeordnet, die zur Aufnahme der Spannvorrichtung 11 ausgebildet ist. Zwischen dem zweiten Keil 5 und der Spannvorrichtung 11 ist die Krafteinrichtung 12 angeordnet. Die Krafteinrichtung 12 umfasst Tellerfedern, die eine Federkraft zwischen dem zweiten Keil 5 und der Spannvorrichtung 11 bewirkt. Die FIG 2 zeigt gegenüber der FIG 1 eine weitere Verschiebung des zweiten Keils 5 gegenüber dem ersten Keil 4. Zu sehen ist, dass der Abstand zwischen dem zweiten Keil 5 und der Spannvorrichtung 11 zum zweiten Bauteil 3 geringer wurde.

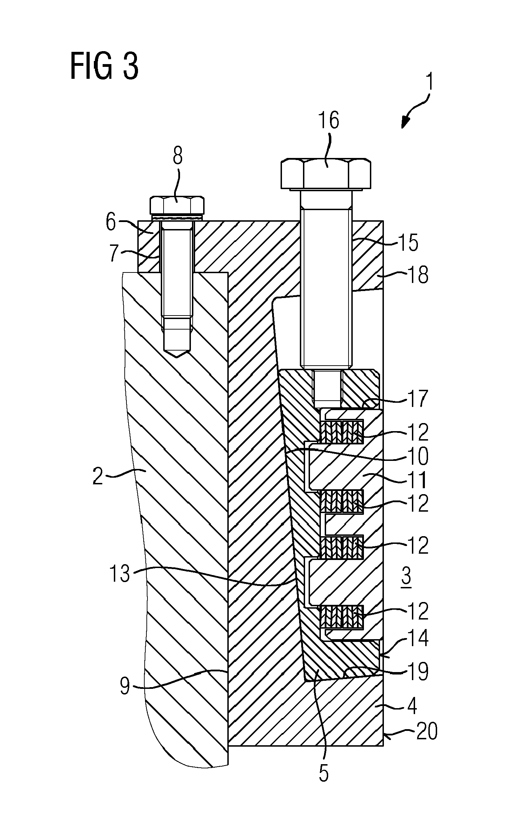

Schließlich wird in der FIG 3 eine weitere Bewegung des zweiten Keils 5 gegenüber dem ersten Keil 4 gezeigt, wobei wiederum der Abstand zwischen der Spannvorrichtung 11 und dem zweiten Keil 5 gegenüber dem zweiten Bauteil 3 verringert ist. Eine kraftschlüssige Wirkung gegenüber dem zweiten Bauteil 3 wird durch die als Federn ausgebildete Krafteinrichtung 12 ermöglicht. In diesem Zustand verbleibt die Vorrichtung 1. Sollte sich während des Betriebs der Abstand zwischen dem ersten Bauteil 2 und dem zweiten Bauteil 3 vergrößern, so wird dieses Spiel überbrückt infolge der Federkraft der als Tellerfedern ausgebildeten Krafteinrichtung 12.

Sollte die Federkraft der Krafteinrichtung 12 ausfallen oder zu gering sein oder ein Versagen der Federn oder der Gleitflächen vorliegen, übernimmt der zweite Keil 5 allein die Funktion und muss derart ausgebildet sein, dass ein oberer Anschlag 18 und ein unterer Anschlag 19 nicht zu unerwünschten Störungsfällen führen.

## Patentansprüche

1. Vorrichtung (1) zum Überbrücken eines Spiels zwischen einem ersten Bauteil (2) und einem zweiten Bauteil (3), wobei die Vorrichtung (1) einen ersten Keil (4) und einen zweiten Keil (5) umfasst, die gegeneinander verschiebbar ausgebildet sind,
**dadurch gekennzeichnet, dass**
im zweiten Keil (5) eine Spannvorrichtung (11) angeordnet ist,
wobei eine Krafteinrichtung (12) vorgesehen ist, mit der die Spannvorrichtung (11) eine Kraft auf das zweite Bauteil (3) ausüben kann.

2. Vorrichtung (1) nach Anspruch 1,
wobei der erste Keil (4) eine erste Vorderfläche (9) zum Anlegen an das erste Bauteil (2) und eine erste Gleitfläche (10) zum Anlegen an den zweiten Keil (5) aufweist,
wobei der zweite Keil (5) eine zweite Gleitfläche (13) zum Anlegen an die erste Gleitfläche (10) und eine Gleitfläche (14) zum Anlegen an das zweite Bauteil (3) ausweist ist.

3. Vorrichtung (1) nach Anspruch 2,
wobei die Gleitfläche (14) im zweiten Keil (5) eine Nut (17) zur Aufnahme der Spannvorrichtung (11) aufweist.

4. Vorrichtung (1) nach Anspruch 3,
wobei zwischen dem zweiten Keil (5) und der Spannvorrichtung (11) die Krafteinrichtung (12) angeordnet ist.

5. Vorrichtung (1) nach einem der Ansprüche 1 bis 4,
wobei die Krafteinrichtung (12) elastische Federn umfasst.

6. Vorrichtung (1) nach einem der vorhergehenden Ansprüche,
wobei der erste Keil (4) eine Fixiervorrichtung zum kraftschlüssigen Fixieren des ersten Keils (4) an das erste Bauteil (2) aufweist.

7. Vorrichtung (1) nach einem der vorhergehenden Ansprüche, wobei der erste Keil (4) eine Verschiebevorrichtung zum Verschieben des zweiten Keils (5) gegen den ersten Keil (4) umfasst.

8. Vorrichtung (1) nach einem der vorhergehenden Ansprüche, wobei die Verschiebevorrichtung eine Schraube (16) umfasst.
